# EUROPÄISCHE PATENTSCHRIFT

(11) **EP 1 618 285 B1**
(45) Veröffentlichungstag und Bekanntmachung des Hinweises auf die Patenterteilung: **07.12.2016**
(21) Anmeldenummer: 04723969.4
(22) Anmeldetag: 29.03.2004
(51) Int. Cl.: F01D 5/00

(54) **VERFAHREN ZUR MONTAGE/DEMONTAGE VON FLUGZEUGTRIEBWERKEN**
METHOD OF ASSEMBLY/DISASSEMBLY OF AVIATION ENGINES
PROCÉDÉ D'ASSEMBLAGE/DESASSEMBLAGE DES MOTEURS D'AVION

(30) Priorität: 27.04.2003 DE 10319015
(43) Veröffentlichungstag der Anmeldung: 25.01.2006
(73) Patentinhaber: MTU Aero Engines AG, 80995 München (DE)
(72) Erfinder: BURMEISTER, Rolf, 31637 Rodewald (DE); EXLER, Ferdinand, 31552 Apelern (DE); PETRICK, Torsten, 30900 Wedemark (DE); SIEDOW, Heinz-Jürgen, 31535 Neustadt am Rübenberge (DE); WINKLER, Lutz, 31515 Wunstorf (DE)
(86) Internationale Anmeldenummer: PCT/DE2004/000651
(87) Internationale Veröffentlichungsnummer: WO 2004/097179

(56) Entgegenhaltungen:
- EP-A- 0 493 685
- US-A- 5 267 397
- US-A- 5 285 572
- SAWYER J.W., FELLOW P.E., HALLBERG K.: "Turbomachinery Maintenance Handbook" 1980, TURBOMACHINERY INTERNATIONAL PUBLICATIONS , NORWALK, USA , XP002293430 Seiten 10-1 - Seiten 10-4
- BREMER C: "KOMPRESSOR-UND TURBINENSCHAUFELN AUTOMATISCH REPARIEREN" WERKSTATT UND BETRIEB, CARL HANSER VERLAG. MUNCHEN, DE, Bd. 129, Nr. 7/8, 1. August 1996 (1996-08-01), Seiten 672-674, XP000678763 ISSN: 0043-2792

## Beschreibung

Die Erfindung betrifft ein Verfahren zur Montage und/oder Demontage von Flugzeugtriebwerken nach dem Oberbegriff des Patentanspruchs 1.

Der Wartung bzw. Instandhaltung und insbesondere Reparatur von Flugzeugtriebwerken, kommt bei der Ermittlung der direkten Betriebskosten eines Flugszeugs eine entscheidende Rolle zu. So sind in etwa 30 % der direkten Betriebskosten eines Flugzeugs den Flugzeugtriebwerken zuzuordnen, wobei in etwa ein Drittel der die Triebwerke betreffenden Betriebskosten auf die Instandhaltung der Flugtriebwerke entfällt. Insofern machen die Kosten für die Instandhaltung von Flugtriebwerken in etwa 10 % der gesamten direkten Betriebskosten eines Flugzeugs aus. Hieraus folgt unmittelbar, dass eine effiziente und kostengünstige Instandhaltung bzw. Wartung und Reparatur von Flugzeugtriebwerken für Fluggesellschaften von entscheidender Bedeutung ist. Ähnliches gilt auch für stationäre Gasturbinen.

Bislang wurde bei der Instandhaltung bzw. Wartung von Flugzeugtriebwerken nach dem sogenannten Werkstattprinzip vorgegangen. Bei dem sogenannten Werkstattprinzip verbleibt das Flugzeugtriebwerk zumindest in Teilen an einer Position bzw. an einem Ort. Benötigtes Arbeitsmaterial, benötigte Arbeitswerkzeuge sowie benötigtes Arbeitspersonal werden zeitlich so an das Flugzeugtriebwerk herangeführt, dass möglichst wenige Störungen auftreten und eine zugesagte Instandhaltungszeit eingehalten werden kann.

So offenbart US-A-5,267,397 ein Verfahren zur Reparatur einer Gasturbine, bei der die Demontage in mindestens zwei Arbeitsschritten zugeordneten Arbeitsstationen durchgeführt wird und die demontierten Teile anschließend inspiziert und repariert werden.

Sawyer J. W., Fellow P. E., Hellberg K.: "Turbomaschinery Maintenance Handbock" 1980, Turbomaschinery International Publications, Norwake, USA, 10-1 bis 10-4 zeigt ebenfalls die Demontage eines Triebwerks durch zwei voneinander verschiedene Arbeitsschritte in zwei voneinander verschiedenen Arbeitsstationen.

US-A-5,285,572 offenbart ein Verfahren zur Bearbeitung von konturierten Bauteilen, die verschiedenen Arbeitsstationen geführt werden.

Die Montage bzw. Demontage von Gasturbinen, insbesondere Flugzeugtriebwerken, nach dem hier beschriebenen Werkstattprinzip verfügt jedoch über den Nachteil, dass die Instandhaltung keiner definierten Prozessstruktur folgt. Vielmehr werden Arbeiten an der Gasturbine, insbesondere am Flugzeugtriebwerk, in nahezu beliebiger Reihenfolge durchgeführt, wodurch sich insbesondere dann, wenn gleichzeitig mehrere Gasturbinen bzw. Flugzeugtriebwerke gewartet werden, Störungen und Verzögerungen bei der Wartung ergeben können. Eine Wartung nach dem sogenannten Werkstattprinzip verfügt demnach über die Nachteile, dass einerseits keine klare Prozessstruktur besteht und dass andererseits lange Zeiten für die Wartung bzw. Instandhaltung benötigt werden. Dies beeinträchtigt die Effizienz der Wartung von Gasturbinen, insbesondere Flugzeugtriebwerken.

Hiervon ausgehend liegt der vorliegenden Erfindung das Problem zu Grunde, ein neuartiges Verfahren zur Montage und/oder Demontage von Flugzeugtriebwerken zu schaffen.

Dieses Problem wird dadurch gelöst, dass das eingangs genannte Verfahren zur Montage und/oder Demontage von Flugzeugtriebwerken durch die Merkmale des kennzeichnenden Teils des Patentanspruchs 1 weitergebildet ist.

Bei der Wartung, insbesondere Reparatur, von Flugzeugtriabwerken werden Flugzeugtriebwerke demontiert. Anschließend werden Einzelteile der Flugzeugtriebwerke inspiziert und/oder repariert. Darauffolgend wird ein Flugzeugtriebwerk aus inspizierten und/oder reparierten Einzelteilen montiert, wobei unter Einzelteilen auch Module oder Baugruppen zu verstehen sind. Die Demontage und/oder Montage wird in mindestens zwei Arbeitsschritte unterteilt, wobei für jeden Arbeitsschritt jeweils eine Arbeitsstation vorgesehen wird, und wobei das Flugzeugtriebwerk und/oder Einzelteile des Flugzeugtriebwerks, durch die einzelnen Arbeitsstationen bewegt wird, um das Flugzeugtriebwerk oder Einzelteile zur Ausführung eines Arbeitsschritts in die hierfür vorgesehene Arbeitsstation zu bewegen. Erfindungsgemäß wird die Demontage und/oder Montage in mehrere Hauptarbeitsschritte und in zumindest einem der Hauptarbeitsschritte zugeordnete Unterarbeitsschritte unterteilt, wobei bei der Demontage die einem Hauptarbeitsschritt zugeordneten Unterarbeitsschritte dem jeweiligen Hauptarbeitsschritt nachgeschaltet und bei der Montage entsprechend vorgeschaltet sind. Für jeden Hauptarbeitsschritt ist jeweils eine Hauptarbeitsstation und für jeden Unterarbeitsschritt ist jeweils eine Unterarbeitsstation vorgesehen.

Das erfindungsgemäße Verfahren zur Montage und/oder Demontage von Flugzeugtriebwerken schlägt erstmals vor, die Wartung bzw. Instandhaltung von Flugzeugtriebwerken nach einem sogenannten Fließbandprinzip vorzunehmen. Es ist demnach eine grundlegende Erkenntnis der hier vorliegenden Erfindung, dass das Fließbandprinzip auch für Wartungsarbeiten bzw. Instandhaltungsarbeiten an Flugzeugtriebwerken geeignet ist. Mit der Erfindung wird das Vorurteil überwunden, dass das Fließbandprinzip nur bei der Neuproduktion von Flugzeugtriebwerken geeignet sei, jedoch nicht für die Wartung bzw. Instandhaltung derselben. Dieses Vorurteil aus dem Stand der Technik liegt darin begründet, dass bei der Neuproduktion aus Einzelteilen oder Rohstoffen mit einer definierten Beschaffenheit ein neuer Artikel entsteht, wohingegen bei der Wartung bzw. Instandhaltung ein Artikel mit unbekannter Beschaffenheit demontiert, inspiziert, repariert und darauffolgend montiert werden muss. Im Unterschied zur Neuproduktion sind bei der Instandhaltung bzw. Wartung von Flugzeugtriebwerken die erforderlichen Arbeitsschritte nicht stets gleich, sondern immer abhängig von der konkreten Beschaffenheit der zu wartenden Gasturbine bzw. des zu wartenden Flugzeugtriebwerks. Die hier vorliegende Erfindung zeigt jedoch, dass auch bei der Wartung von Flugzeugtriebwerken ein Fließbandprinzip erfolgreich eingesetzt werden kann. Das erfindungsgemäße Verfahren ermöglicht eine hohe Effizienz bei der Wartung von Gasturbinen, insbesondere Flugzeugtriebwerken, und eine kurze Wartungszeit. Das erfindungsgemäße Verfahren ist sehr flexibel.

Nach einer vorteilhaften Weiterbildung der Erfindung wird das Flugzeugtriebwerk und/oder Einzelteile desselben diskontinuierlich, nämlich in einem Takt, durch die Arbeitsstationen, d. h. durch die Hauptarbeits- und Unterarbeitsstationen bewegt, wobei jeder Arbeitsschritt in der jeweiligen Arbeitsstationen an den Takt angepasst ist.

Der Takt der Unterarbeitsstationen ist vorzugsweise kürzer als der Takt der Hauptarbeitstationen. Einzelteile eines anderen Flugzeugtriebwerks können so in das Verfahren eingeschleust werden.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: ein Signalflussdiagramm zur Verdeutlichung des erfindungsgemäßen Verfahrens, umfassend Demontage eines Flugzeugtriebwerks, Reparatur von Modulen und/oder Baugruppen und/oder Einzelteilen eines Flugzeugtriebwerks, Montage eines Flugzeugtriebwerks;
- Fig. 2:: ein detaillierteres Signalflussdiagramm eines Blocks des Signalflussdiagramms gemäß Fig. 1 zur Verdeutlichung der Demontage des Flugzeugtriebwerks;
- Fig. 3:: ein detaillierteres Signalflussdiagramm eines Blocks des Signalflussdiagramms gemäß Fig. 1 zur Verdeutlichung der Montage des Flugzeugtriebwerks; und
- Fig. 4:: einen stark schematisierten Querschnitt durch ein zu wartendes Flugzeugtriebwerk.

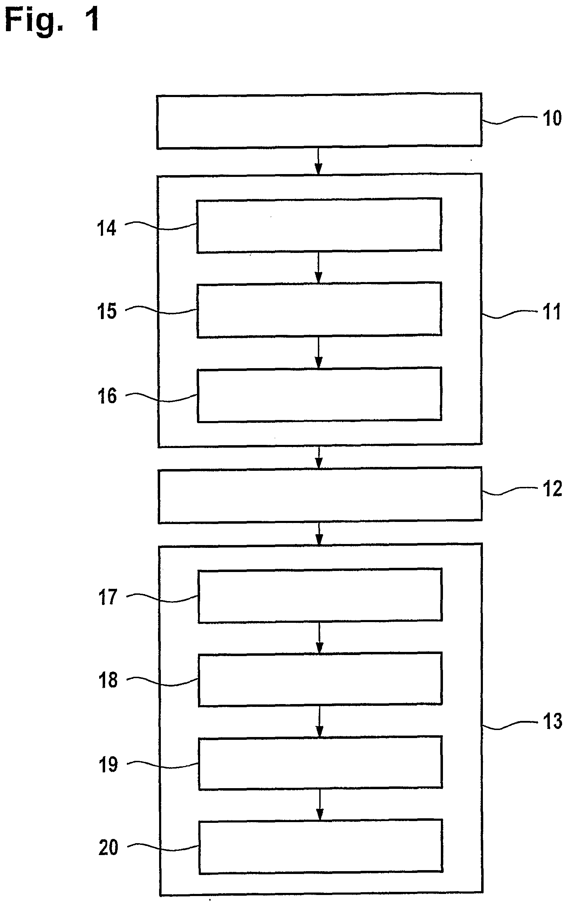

Anhand der Fig. 1 bis 4 wird das erfindungsgemäße Verfahren anhand der Wartung bzw. Instandhaltung bzw. Reparatur von Gasturbinen am Beispiel eines Flugzeugtriebwerks in größerem Detail beschrieben.

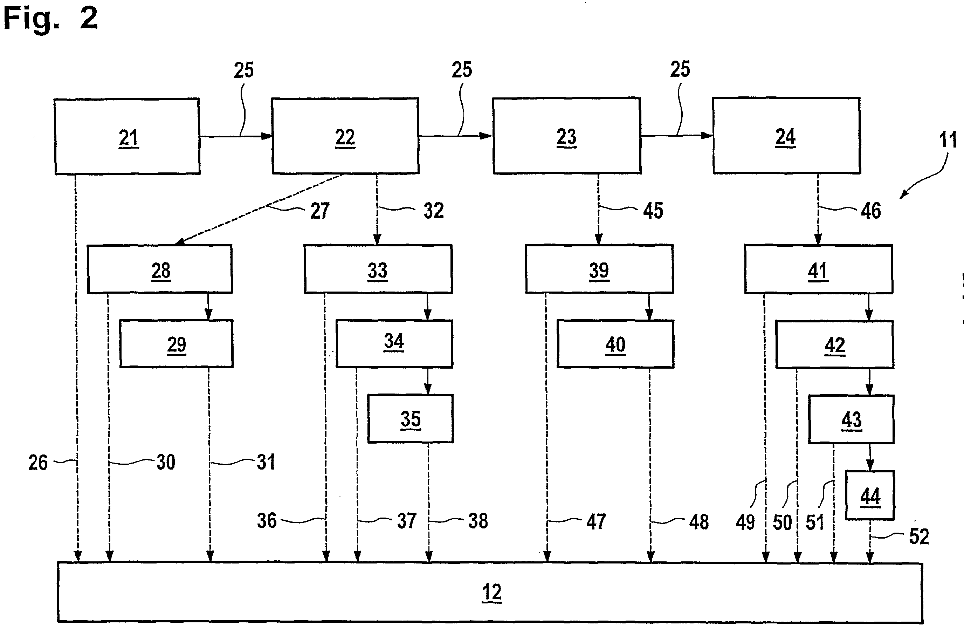

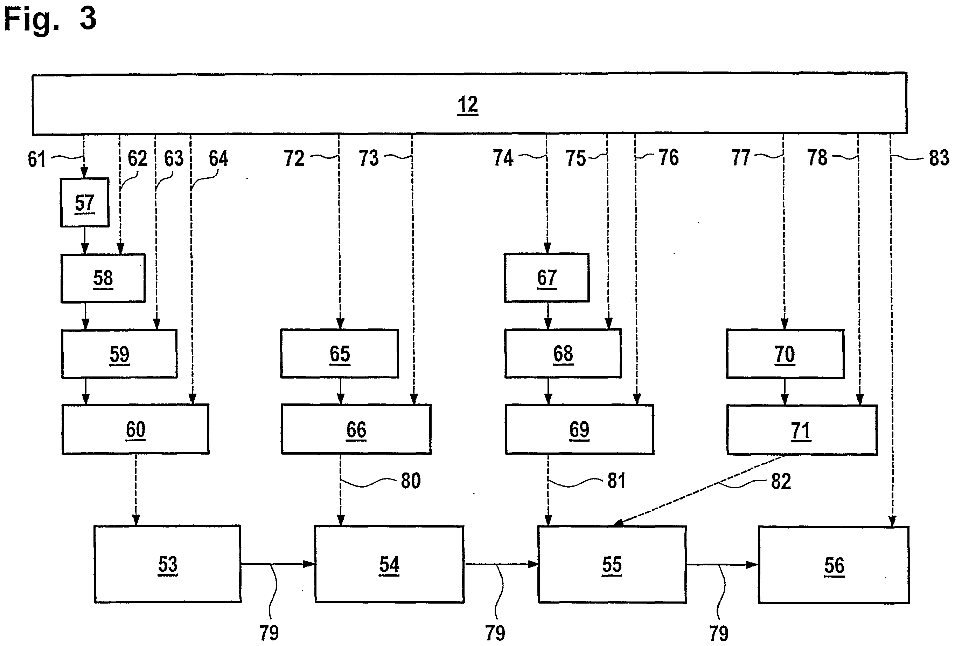

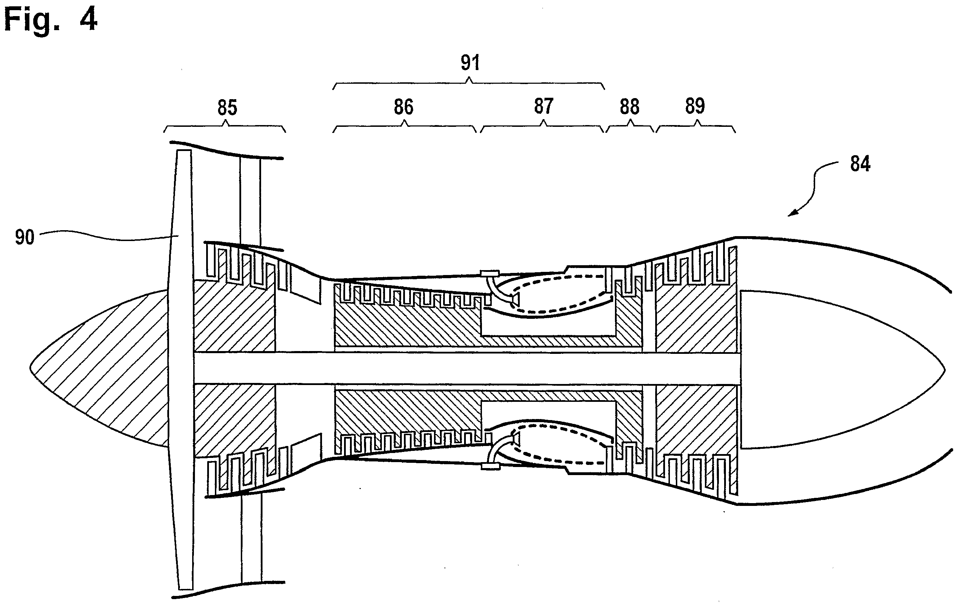

Fig. 1 zeigt ein stark schematisiertes Signalflussdiagramm bzw. Blockschaltbild des erfindungsgemäßen Verfahrens. So zeigt Fig. 1 die Reinigung, Demontage, Reparatur sowie anschließende Montage von Flugzeugtriebwerken. Fig. 2 zeigt ein detaillierteres Blockschaltbild betreffend die Demontage eines Flugzeugtriebwerks, Fig. 3 zeigt ein detaillierteres Blockschaltbild betreffend die Montage eines Flugzeugtriebwerks. Fig. 4 zeigt eine stark schematisierter Darstellung eines zu wartenden Flugzeugtriebwerks sowie seiner Module.

Gemäß Fig. 1 wird in einem ersten Schritt 10 ein zu wartendes Flugzeugtriebwerk gereinigt. Nach der Reinigung wird in einem zweiten Schritt 11 das Flugzeugtriebwerk in Module und/oder Baugruppen und/oder Einzelteile zerlegt bzw. demontiert. An die Demontage des Flugzeugtriebwerks gemäß Schritt 11 schließt sich ein dritter Schritt 12 an, in welchem die Module und/oder Baugruppen und/oder Einzelteile des Flugzeugtriebwerks inspiziert und/oder repariert werden. Ergibt im Schritt 12 die Inspektion, dass ein Modul und/oder eine Baugruppe und/oder ein Einzelteil des Flugzeugtriebwerks unbeschädigt ist, so kann eine Reparatur desselben selbstverständlich entfallen. Im Anschluss an die Inspektion und ggf. Reparatur gemäß Schritt 12 wird in einem vierten Schritt 13 ein Flugzeugtriebwerk zusammengesetzt bzw. montiert. Bei der Montage des Flugzeugtriebwerks wird ein Flugzeugtriebwerk aus inspizierten und/oder reparierten und/oder neuen Modulen bzw. Baugruppen bzw. Einzelteilen zusammengesetzt. Ergibt nämlich die Inspektion in Schritt 12, dass ein Modul bzw. eine Baugruppe bzw. ein Einzelteil des Flugzeugtriebwerks nicht mehr repariert werden kann so wird dasselbe durch ein neues bzw. neuwertiges Modul bzw. eine Baugruppe bzw. ein Einzelteil ersetzt.

Erfindungsgemäß wird sowohl die Demontage gemäß Schritt 11 als auch die Montage gemäß Schritt 13 in mindestens zwei Hauptarbeitsschritte und den Hauptarbeitsschritten zugeordnete Unterarbeitsschritte unterteilt. Für jeden Arbeitsschritt ist eine Arbeitsstation vorgesehen. Das Flugzeugtriebwerk und/oder ein Modul und/oder eine Baugruppe und/oder ein Einzelteil des Flugzeugtriebwerks werden durch die einzelnen Arbeitsstationen bewegt, um das Flugzeugtriebwerk und/oder das Modul und/oder die Baugruppe und/oder das Einzelteil des Flugzeugtriebwerks zur Ausführung eines Arbeitsschritts in die hierfür vorgesehene Arbeitsstation zu bewegen. Das Flugzeugtriebwerk verbleibt demnach nicht an einem Ort bzw. an einer Position, sondern es wird vielmehr unter Veränderung seines Orts durch unterschiedliche Arbeitsstationen bewegt. Es liegt demnach im Sinne der Erfindung, für die Wartung bzw. Instandhaltung von Flugzeugtriebwerken erstmalig das sogenannte Fließbandprinzip einzusetzen.

Fig. 1 verdeutlicht bzw. visualisiert die Unterteilung der Demontage gemäß Schritt 11 sowie der Montage gemäß Schritt 13 in unterschiedliche Hauptarbeitsschritte. So ist gemäß Fig. 1 die Demontage des Flugzeugtriebwerks vorzugsweise in drei Hauptarbeitsschritte 14, 15 und 16 unterteilt, wohingegen die Montage des Flugzeugtriebwerks vorzugsweise in vier Hauptarbeitsschritte 17, 18, 19 und 20 unterteilt ist. Es ist selbstverständlich, dass auch eine geringere oder eine höhere Anzahl von Hauptarbeitsschritten bei der Demontage gemäß Schritt 11 sowie bei der Montage gemäß Schritt 13 vorgesehen werden können. Bei der Montage gemäß Schritt 13 wird jedoch vorzugsweise immer ein Hauptarbeitsschritt mehr vorgesehen als bei der Demontage gemäß Schritt 11, da das bei der Montage zusammengesetzte Flugzeugtriebwerk nach der Montage noch durch Einstellarbeiten am Flugzeugtriebwerk justiert werden muss.

Bereits im Zusammenhang mit Fig. 1 sei angemerkt, dass für jeden der Hauptarbeitsschritte eine Hauptarbeitsstation vorgesehen ist. Im Sinne der Erfindung wird das Flugzeugtriebwerk bzw. Module, Baugruppen oder Einzelteile desselben sowohl bei der Demontage gemäß Schritt 11 als auch bei der Montage gemäß Schritt 13 durch die unterschiedlichen Hauptarbeitsstationen bewegt. Die Arbeitsstationen sind an den jeweiligen Arbeitsschritt angepasst bzw. adaptiert. In jeder Arbeitsstation werden für den jeweiligen Hauptarbeitsschritt 14 bis 20 benötigte Arbeitswerkzeuge und gegebenenfalls Arbeitsmaterialien bereitgestellt. Jede Arbeitsstation ist demnach an den speziellen Arbeitsschritt, der in der jeweiligen Arbeitsstation ausgeführt werden soll, angepasst.

Bevorzugt ist eine Ausführungsform des erfindungsgemäßen Verfahrens, bei welcher das Flugzeugtriebwerk und/oder die Module und/oder die Baugruppen und/oder die Einzelteile des Flugzeugtriebwerks diskontinuierlich durch die Hauptarbeitsstationen 14 bis 20 bewegt werden. Unter der diskontinuierlichen Bewegung ist zu verstehen, dass die Bewegung durch die einzelnen Hauptarbeitsstationen nach einem Takt erfolgt. Die Länge des Takts ist dabei an die Hauptarbeitsschritte in den jeweiligen Arbeitsstationen angepasst. Der Takt ist demnach so bemessen, dass für jede Arbeitsstation genug Zeit reserviert ist, dass der in der jeweiligen Arbeitsstation auszuführende Hauptarbeitsschritt sicher ausgeführt werden kann. Da der Takt für jede der hintereinander angeordneten Arbeitsstationen, durch die das Flugzeugtriebwerk bei der Demontage bzw. Montage bewegt wird, gleich lang ist, sind die zur Montage sowie Demontage erforderlichen Arbeitsschritte derart auf die Arbeitsstationen aufgeteilt, dass bei der Montage sowie Demontage keine Zeitprobleme auftreten.

Es ist selbstverständlich, dass unterschiedliche Typen von Triebwerken mit dem erfindungsgemäßen Verfahren gewartet werden können. Die in den Arbeitsstationen durchzuführenden Arbeitsschritte sind so an die unterschiedlichen Triebwerkstypen angepasst, dass für jedes Triebwerk der Takt eingehalten werden kann. Die Triebwerkstypen sind Serientriebwerke und sind dem hier angesprochenen Fachmann geläufig.

Fig. 2 verdeutlicht die Demontage eines Flugzeugtriebwerks in größerem Detail. So wird gemäß Fig. 2 die Demontage in mehrere Hauptarbeitsschritte sowie mehrere Unterarbeitsschritte unterteilt. Für jeden Hauptarbeitsschritt ist eine Hauptarbeitsstation sowie für jeden Unterarbeitsschritt ist eine Unterarbeitsstation vorgesehen. So sind beim Ausführungsbeispiel gemäß Fig. 2 insgesamt vier Hauptarbeitsstationen 21, 22, 23 und 24 vorgesehen. Die Hauptarbeitsstationen 21 bis 24 sind hintereinander angeordnet, so dass ein zu wartendes bzw. zu demontierendes Flugzeugtriebwerk ausgehend von der ersten Hauptarbeitsstation 21 sukzessive, d.h. hintereinander, durch die nachgeordneten Hauptarbeitsstationen 22, 23 und 24 bewegt wird. Die Bewegung des zu demontierenden Flugzeugtriebwerks durch die Hauptarbeitsstationen 21 bis 24 ist durch die Pfeile 25 visualisiert. Die Bewegung des zu demontierenden Flugzeugtriebwerks durch die Hauptarbeitsstationen 21 bis 24 erfolgt unter Verwendung einer Fördereinrichtung, welche das zu demontierende Flugzeugtriebwerk diskontinuierlich, d.h. in einem Takt, durch die Hauptarbeitsstationen 21 bis 24 bewegt.

In der ersten Hauptarbeitsstation 21 wird ein im Sinne des Schritts 10 (siehe Fig. 1) gereinigtes Flugzeugtriebwerk positioniert und als Einheit inspiziert. Die Inspektion des gesamten Flugzeugtriebwerks in der ersten Hauptarbeitsstation 21 erfolgt mithilfe eines Boroskops. Bei dieser boroskopischen Inspektion des Flugzeugtriebwerks in der ersten Hauptarbeitsstation 21 wird der Zustand des Flugzeugtriebwerks festgestellt und dokumentiert. Bereits hier können notwendige Reparaturarbeiten am Flugzeugtriebwerk abgeschätzt werden. Ebenfalls wird in der ersten Hauptarbeitsstation 21 ein Hauptlüfterrad-Modul vom Flugzeugtriebwerk demontiert. Das demontierte Hauptlüfterrad-Modul wird sodann im Sinne des Pfeils 26 einer weiteren Inspektion sowie ggf. einer Reparatur im Sinne des Schritts 12 zugeführt. Die boroskopische Inspektion sowie Zustandsdokumentation des gereinigten Flugzeugtriebwerks und die Demontage des Hauptlüfterrad-Moduls in der ersten Hauptarbeitsstation 21 bestimmen einen ersten Hauptarbeitsschritt.

Das um das Hauptlüfterrad-Modul demontierte Flugzeugtriebwerk wird im Sinne des Pfeils 25 in die zweite Hauptarbeitsstation 22 bewegt und dort einem zweiten Hauptarbeitsschritt unterzogen. Im zweiten Hauptarbeitsschritt 22 werden ein Niederdruckturbinen-Modul sowie ein Hochdruckturbinen-Modul vom Flugzeugtriebwerk entfernt.

Nach Erreichen des nächsten Takts wird das entsprechend weiter demontierte Flugzeugtriebwerk im Sinne des Pfeils 25 in die dritte Hauptarbeitsstation 23 bewegt und dort einem dritten Hauptarbeitsschritt unterzogen. Im dritten Hauptarbeitsschritt wird ein Hochdruckverdichter-Modul vom Flugzeugtriebwerk demontiert, wobei das Hochdruckverdichter-Modul aus dem eigentlichen Hochdruckverdichter und der Brennkammer besteht. Nach Demontage des Hochdruckverdichter-Moduls bleibt lediglich das Lüfter-Modul(Fan-Case-Modul) übrig. Dieses wird dann vorzugsweise im Sinne des Pfeils 25 in eine vierte Hauptarbeitsstation 24 bewegt, wobei jedoch in der vierten Hauptarbeitsstation 24 kein weiterer Hauptarbeitsschritt ausgeführt wird.

An dieser Stelle sei nochmals darauf hingewiesen, dass das Flugzeugtriebwerk im Takt Schritt für Schritt durch die einzelnen Hauptarbeitsstationen 21 bis 24 bewegt wird. In den ersten drei Hauptarbeitsstationen 21 bis 23 werden Hauptarbeitsschritte ausgeführt. Die Hauptarbeitsstationen 21 bis 23 sind an die in den Hauptarbeitsstationen auszuführenden Hauptarbeitsschritte angepasst, d.h. es werden die erforderlichen Arbeitswerkzeuge bereitgehalten.

Gemäß Fig. 2 sind den Hauptarbeitsstationen 22, 23 und 24 Unterarbeitsstationen nachgeordnet. In den Unterarbeitsstationen werden die vom Flugzeugtriebwerk demontierten Module - im gezeigten Ausführungsbeispiel das Niederdruckturbinen-Modul, das Hochdruckturbinen-Modul, das Hochdruckverdichter-Modul sowie das Lüfter-Modul - einer weiteren Demontage in Baugruppen bzw. in Einzelteile unterzogen.

So wird gemäß Fig. 2 im Sinne des Pfeils 27 das während des zweiten Hauptarbeitsschritts in der zweiten Hauptarbeitsstation 22 demontierte Niederdruckturbinenmodul einer ersten Unterarbeitsstation 28 zugeführt. Der ersten Unterarbeitsstation 28 ist im gezeigten Ausführungsbeispiel eine zweite Unterarbeitsstation 29 nachgeordnet. Das Niederdruckturbinen-Modul wird taktweise durch die beiden Unterarbeitsstationen 28 und 29 bewegt und in diesen Unterarbeitsstationen 28, 29 werden zur weiteren Demontage des Niederdruckturbinen-Moduls Unterarbeitsschritte ausgeführt. Die während der Unterarbeitsschritte in den Unterarbeitsstationen 28 und 29 vom Niederdruckturbinen-Modul demontierten Baugruppen bzw. Einzelteile werden dann im Sinne der Pfeile 30, 31 im Schritt 12 einer weiteren Inspektion bzw. einer Reparatur unterzogen.

In Analogie zum Niederdruckturbinen-Modul wird das in der zweiten Hauptarbeitsstation 22 demontierte Hochdruckturbinen-Modul im Sinne des Pfeils 32 einer ersten Unterarbeitsstation 33 zugeführt. Der ersten Unterarbeitsstation 33 sind im gezeigten Ausführungsbeispiel zwei weitere Unterarbeitsstationen 34 und 35 nachgeordnet. Zur Demontage des Hochdruckturbinen-Moduls wird dasselbe taktweise durch die drei hintereinander angeordneten Unterarbeitsstationen 33, 34 und 35 bewegt und in den entsprechenden Unterarbeitsschritten in Baugruppen bzw. Einzelteile zerlegt. Diese werden dann im Sinne der Pfeile 36, 37 und 38 einer weiteren Inspektion bzw. Reparatur nach Schritt 12 zugeführt.

Analog wird bei der weiteren Demontage des Hochdruckverdichter-Moduls sowie des Lüfter-Moduls vorgegangen. So sind der dritten Hauptarbeitsstation 23 insgesamt zwei Unterarbeitsstationen 39 und 40 nachgeordnet. Der vierten Hauptarbeitsstation 24 sind im gezeigten Ausführungsbeispiel insgesamt vier Unterarbeitsstationen 41, 42, 43 und 44 nachgeordnet. Zur weiteren Demontage des Hochdruckverdichter-Moduls sowie Lüfter-Moduls werden dieselben durch die entsprechenden Unterarbeitsstationen 39 und 40 bzw. 41 bis 44 bewegt.

So wird das im dritten Hauptarbeitsschritt bzw. in der dritten Hauptarbeitsstation 23 demontierten Hochdruckverdichter-Modul, umfassend den eigentlichen Hochdruckverdichter und die Brennkammer, im Sinne des Pfeils 45 der Unterarbeitsstation 39 und das Lüfter-Modul im Sinne des Pfeils 46 der Unterarbeitsstation 41 zugeführt. Entsprechend der Anzahl der vorhandenen Unterarbeitsstationen werden sowohl das Hochdruckverdichter-Modul als auch das Lüfter-Modul durch die entsprechenden Unterarbeitsstationen bewegt und dabei in entsprechende Baugruppen bzw. Einzelteile zerlegt. Diese Baugruppen bzw. Einzelteile werden dann im Sinne der Pfeile 47, 48, 49, 50, 51 und 52 einer weiteren Inspektion bzw. Reparatur im Sinne des Schritts 12 unterzogen bzw. zugeführt.

Aus der oben beschriebenen Struktur des erfindungsgemäßen Verfahrens folgt demnach, dass das Flugzeugtriebwerk in den Hauptarbeitsstationen in Grundmodule zerlegt wird. Hierzu wird das Flugzeugtriebwerk taktweise durch die Hauptarbeitsstationen bewegt, die an die entsprechenden Hauptarbeitsschritte angepasst sind. Die schrittweise bzw. taktweise demontierten Module des Flugzeugtriebwerks werden bis auf das Hauptlüfterrad-Modul von den jeweiligen Hauptarbeitsstationen 22, 23, 24 entnommen und den nachgeordneten Unterarbeitsstationen zugeführt und dort in Baugruppen bzw. Einzelteile zerlegt. Hierzu werden die Module durch die jeweiligen Unterarbeitsstationen bewegt. Auch die Unterarbeitsstationen sind an die in den Unterarbeitsstationen auszuführenden Unterarbeitsschritte angepasst bzw. adaptiert. Die Anzahl der gezeigten Hauptarbeitsstationen sowie Unterarbeitsstationen ist lediglich exemplarischer Natur. Es ist selbstverständlich, dass die Anzahl der Hauptarbeitsstationen sowie Unterarbeitsstationen variiert werden kann.

Die Bewegung des Flugzeugtriebwerks durch die Hauptarbeitsstationen sowie die Bewegung der demontierten Module durch die jeweiligen Unterarbeitsstationen erfolgt vorzugsweise mithilfe eines angepassten Fördermittels bzw. einer Fördereinrichtung.

Vorzugsweise ist der Takt, nach welchem das Flugzeugtriebwerk durch die Hauptarbeitsstationen 21 bis 24 bewegt wird, größer als der Takt mindestens einiger Unterarbeitsstationen. So ist eine Ausgestaltung besonders vorteilhaft, bei welcher der Takt der Hauptarbeitsstationen 21 bis 24, die der Demontage des Flugzeugtriebwerks in Module dienen, gleich dem Takt der Unterarbeitsstationen 41 bis 44 ist, die der weiteren Demontage des Lüfter-Moduls in Baugruppen bzw. Einzelteile dienen. Der Takt der Unterarbeitsstationen 28 und 29 sowie der Unterarbeitsstationen 33 bis 35 sowie der Unterarbeitsstationen 39 und 40, die der weiteren Demontage des Niederdruckturbinen-Moduls bzw. Hochdruckturbinen-Moduls bzw. Hochdruckverdichter-Moduls dienen, ist jedoch kürzer als der Takt der Hauptarbeitsstationen 21 bis 24.

Im gezeigten Ausführungsbeispiel beträgt der Takt der Hauptarbeitsstationen 21 bis 24 sowie der Takt der Unterarbeitsstationen 41 bis 44 sechszehn Stunden. Der Takt der übrigen Unterarbeitsstationen 28, 29 bzw. 33 bis 35 bzw. 39 und 40 beträgt zwölf Stunden. Hierdurch ist es möglich, Module bzw. Baugruppen. bzw. Einzelteile eines anderen Flugzeugtriebwerks, welches nicht komplett zur Demontage angeliefert wird, in den Demontageprozess einzuschleusen. Durch die oben angegebene Auswahl der Takte wird lediglich ein Zwischenlager für ein Modul benötigt.

Nachdem das komplette Flugzeugtriebwerk bzw. eingeschleuste Module eines Flugzeugtriebwerks im Sinne der Fig. 2 in Module bzw. Baugruppen bzw. Einzelteile zerlegt worden sind, erfolgt im Sinne des Schritts 12 eine weitere Inspektion bzw. Reparatur der Module bzw. Baugruppen bzw. Einzelteile des Flugzeugtriebwerks. In dem Fall, in dem die weitere Inspektion ergibt, dass eine Reparatur nicht notwendig ist, kann das entsprechende Modul bzw. die entsprechende Baugruppe bzw. das entsprechende Einzelteil der Montage bzw. einer vorgeschalteten Lagerung für die Montage zugeführt werden. Ergibt die Inspektion in Schritt 12, dass eine Reparatur infolge der Beschädigung nicht mehr möglich oder unwirtschaftlich ist, so wird das Modul bzw. die Baugruppe bzw. das Einzelteil durch ein entsprechendes Neuteil ersetzt. Andere Module bzw. Baugruppen bzw. Einzelteile werden einer Reparatur unterzogen, auf die hier im Detail nicht eingegangen werden soll.

Reparaturverfahren zur Reparatur von Triebwerksmodulen bzw. Triebwerksbauteilen bzw. Triebwerkseinzelteilen sind jedoch aus dem Stand der Technik benannt.

Nach der Inspektion bzw. Reparatur im Sinne des Schritts 12 erfolgt die Montage des Flugzeugtriebwerks im Sinne des Schritts 13. Fig. 3 zeigt für die Montage des Flugzeugtriebwerks ein detailliertes Blockschaltbild

So erfolgt gemäß Fig. 3 die Montage des Flugzeugstriebwerks in Analogie zur Demontage ebenfalls in mehreren Hauptarbeitsschritten sowie mehreren Unterarbeitsschritten. So sind zur Montage eines Flugzeugtriebwerks aus inspizierten und/oder repartieren und/oder neuen Einzelteilen und/oder Baugruppen und/oder Modulen insgesamt vier Hauptarbeitsstationen 53, 54, 55 und 56 vorgesehen. In den Hauptarbeitsstationen 53 bis 56 werden Hauptarbeitsschritte ausgeführt und das Flugzeugtriebwerk wird modulweise zusammengesetzt. Bei der Montage des Flugzeugtriebwerks wird dasselbe abhängig von dessen modulweisen Zusammenbau durch die Hauptarbeitsstationen 53 bis 56 taktweise bewegt. Den ersten drei Hauptarbeitsstationen 53, 54 und 55 sind gemäß Fig. 3 wiederum Unterarbeitstationen zugeordnet, wobei bei der Montage die Unterarbeitsstationen den entsprechenden Hauptarbeitsstationen vorgeschaltet und nicht wie bei der Demontage des Flugzeugtriebwerks (siehe Fig. 2) nachgeschaltet sind. In den Unterarbeitsstationen werden Module des Flugzeugtriebwerks aus Baugruppen oder Einzelteilen zusammengesetzt, wobei das entsprechende Module abhängig von dessen Montagezustand durch hintereinandergeschaltete Unterarbeitsstationen bewegt wird.

So zeigt Fig. 3, dass zur Montage des Lüfter-Moduls insgesamt vier Unterarbeitsstationen 57, 58, 59 und 60 vorhanden sind. Zur Montage des Lüfter-Moduls wird das Lüfter-Modul taktweise durch die Unterarbeitsstationen 57 bis 60 bewegt, und zwar abhängig vom Montagezustand des Lüfter-Moduls. Repartierte bzw. inspizierte Baugruppen oder Einzelteile des Lüfter-Moduls oder auch neuwertige Einzelteile werden im Sinne der Pfeile 61, 62, 63 und 64 den Unterarbeitsstationen 57 bis 60 zugeführt, damit in den entsprechenden Unterarbeitsstationen die jeweiligen Unterarbeitsschritte zum Zusammenbau des Lüfter-Moduls ausgeführt werden können. In Analogie sind der zweiten Hauptarbeitsstation 54 Unterarbeitsstationen 65, 66, und der dritten Hauptarbeitsstation 55 Unterarbeitsstationen 67, 68, 69 bzw. 70, 71 vorgeschaltet. Die der zweiten Hauptarbeitsstation 54 vorgeschalteten Unterarbeitsstationen 65, 66 dienen der taktweisen bzw. schrittweisen Montage des Hochdruckverdichter-Moduls umfassend den Hochdruckverdichter und die Brennkammer, die Unterarbeitsstationen 67, 68 und 69 dienen der taktweisen Montage bzw. dem schrittweisen Zusammenbau des Hochdruckturbinen-Moduls und die Unterarbeitsstationen 70 und 71 dienen dem taktweisen Zusammenbau des Niederdruckturbinen-Moduls. Im Sinne der Pfeile 72, 73, 74, 75, 76, 77 und 78 werden den entsprechenden Unterarbeitsstationen wiederum reparierte und/oder inspizierte und/oder neuwertige Baugruppen bzw. Einzelteile zur Verwendung in den entsprechenden Unterarbeitsschritten zugeführt. Die Unterarbeitsstationen sind an die in den Unterarbeitsstationen auszuführenden Unterarbeitsschritte angepasst, d.h. in jeder der Unterarbeitsstationen werden für den jeweiligen Unterarbeitsschritt benötigte Arbeitswerkzeuge sowie Arbeitsmaterialien bereitgehalten.

Ein in den Unterarbeitsstationen 57 bis 60 montiertes Lüfter-Modul wird in einem ersten Hauptarbeitsschritt in der ersten Hauptarbeitsstation 53 positioniert und anschließend im Sinne des Pfeils 79 in die zweite Hauptarbeitsstation 54 bewegt. Darauffolgend wird dem in der zweiten Hauptarbeitsstation 54 positionierten Lüfter-Modul ein in den Unterarbeitsstationen 65 und 66 montiertes Hochdruckverdichter-Modul im Sinne des Pfeils 80 zugeführt und im zweiten Hauptarbeitschritt werden in der zweiten Hauptarbeitsstation 54 das Lüfter-Modul sowie das Hochdruckverdichter-Modul zusammengebaut. Darauffolgend wird diese teilmontierte Einheit aus Lüfter-Modul sowie Hochdruckverdichter-Modul im Sinne des Pfeils 79 in die dritte Hauptarbeitsstation 55 bewegt. Im dritten Hauptarbeitsschritt, der in der dritten Hauptarbeitsstation 55 ausgeführt wird, werden im Sinne des Pfeils 81 ein montiertes Hochdruckturbinen-Modul und im Sinne des Pfeils 82 ein montiertes Niederdruckturbinen-Modul in die dritte Hauptarbeitsstation 55 bewegt und dort montiert. Darauffolgend wird im Sinne des Pfeils 79 die aus dem Lüfter-Modul, dem Hochdruckverdichter-Modul, dem Niederdruckturbinen-Modul und dem Hochdruckturbinen-Modul montierte Einheit in die vierte Hauptarbeitsstation 56 bewegt. In der vierten Hauptarbeitsstation 56 wird ein vierter Hauptarbeitsschritt ausgeführt. Im vierten Hauptarbeitsschritt wird einerseits ein montiertes Hauptlüfterrad-Modul im Sinne des Pfeils 83 in die vierte Hauptarbeitsstation 56 bewegt sowie dort montiert, und andererseits werden zur Justage des montierten Flugzeugtriebwerks Einstellarbeiten am Flugzeugtriebwerk vorgenommen.

Sowohl bei der Demontage als auch bei der Montage des Flugzeugtriebwerks erfolgt die Bewegung durch die Unterarbeitsstationen sowie Hauptarbeitsstationen taktweise. So beträgt auch bei der Montage des Flugzeugtriebwerks der Takt, in dem die Bewegung durch die Hauptarbeitsstationen 53 bis 56 erfolgt, vorzugsweise sechszehn Stunden. Auch der Takt der Unterarbeitsstationen 57 bis 60, die der Montage des Lüfter-Moduls dienen, beträgt vorzugsweise sechszehn Stunden. Der Takt der übrigen Unterarbeitsstationen 65 und 66 bzw. 67 bis 69 bzw. 70 und 71 beträgt wiederum vorzugsweise zwölf Stunden und ist demnach kürzer als der Takt der Hauptarbeitsstationen. Hierdurch wird es wiederum möglich, Fremdmodule in den Montageprozess einzuschleusen. Das gesamte Reparaturverfahren ist demnach offen. Es können unterschiedlichste Triebwerktypen gewartet werden. Auch ist es möglich, lediglich einzelne Module von Fremdtriebwerken in den Wartungsprozess bzw. das erfindungsgemäße Verfahren einzuschleusen.

Fig. 4 dient der Verdeutlichung der oben mehrfach erwähnten Module bzw. Baugruppen eines zu wartenden Flugzeugtriebwerks 84. Das Flugzeugtriebwerk 84 gemäß Fig. 4 verfügt über ein Hauptlüfterrad-Modul 90, ein Fan-Case-Modul bzw. Lüfter-Modul 85, ein Niederdruckturbinen-Modul 89, ein Hochdruckturbinen-Modul 88 und ein Hockdruckverdichter-Modul 91 umfassend die Baugruppen Hochdruckverdichter 86 und Brennkammer 87.

Mithilfe der Erfindung wird erstmals vorgeschlagen, bei der Reparatur bzw. Wartung bzw. Instandhaltung von Flugzeugtriebwerken ein sogenanntes Fließbandprinzip einzusetzen. Damit wird das aus dem Stand der Technik bekannte Vorurteil überwunden, dass sich ein Fließbandprozess für Wartungsarbeiten bzw. Reparaturarbeiten nicht eignet.

### Bezugszeichenliste

- Schritt: 10
- Schritt: 11
- Schritt: 12
- Schritt: 13
- Arbeitsschritt: 14
- Arbeitsschritt: 15
- Arbeitsschritt: 16
- Arbeitsschritt: 17
- Arbeitsschritt: 18
- Arbeitsschritt: 19
- Arbeitsschritt: 20
- Hauptarbeitsstation: 21
- Hauptarbeitsstation: 22
- Hauptarbeitsstation: 23
- Hauptarbeitsstation: 24
- Pfeil: 25
- Pfeil: 26
- Pfeil: 27
- Unterarbeitsstation: 28
- Unterarbeitsstation: 29
- Pfeil: 30
- Pfeil: 31
- Pfeil: 32
- Unterarbeitsstation: 33
- Unterarbeitsstation: 34
- Unterarbeitsstation: 35
- Pfeil: 36
- Pfeil: 37
- Pfeil: 38
- Unterarbeitsstation: 39
- Unterarbeitsstation: 40
- Unterarbeitsstation: 41
- Unterarbeitsstation: 42
- Unterarbeitsstation: 43
- Unterarbeitsstation: 44
- Pfeil: 45
- Pfeil: 46
- Pfeil: 47
- Pfeil: 48
- Pfeil: 49
- Pfeil: 50
- Pfeil: 51
- Pfeil: 52
- Hauptarbeitsstation: 53
- Hauptarbeitsstation: 54
- Hauptarbeitsstation: 55
- Hauptarbeitsstation: 56
- Unterarbeitsstation: 57
- Unterarbeitsstation: 58
- Unterarbeitsstation: 59
- Unterarbeitsstation: 60
- Pfeil: 61
- Pfeil: 62
- Pfeil: 63
- Pfeil: 64
- Unterarbeitsstation: 65
- Unterarbeitsstation: 66
- Unterarbeitsstation: 67
- Unterarbeitsstation: 68
- Unterarbeitsstation: 69
- Unterarbeitsstation: 70
- Unterarbeitsstation: 71
- Pfeil: 72
- Pfeil: 73
- Pfeil: 74
- Pfeil: 75
- Pfeil: 76
- Pfeil: 77
- Pfeil: 78
- Pfeil: 79
- Pfeil: 80
- Pfeil: 81
- Pfeil: 82
- Pfeil: 83
- Flugzeugtriebwerk: 84
- Lüfter-Modul: 85
- Hockdruckverdichter: 86
- Brennkammer: 87
- Hochdruckturbinen-Modul: 88
- Niederdruckturbinen-Modul: 89
- Hauptlüfterrad-Modul: 90
- Hockdruckverdichter-Modul: 91

## Patentansprüche

1. Verfahren zur Montage und/oder Demontage von Flugzeugtriebwerken, wobei ein Flugzeugtriebwerk demontiert wird, anschließend Einzelteile des Flugzeugtriebwerks, wie Modulen oder Baugruppen, repariert werden, und wobei anschließend das Flugzeugtriebwerk, aus inspizierten und/oder reparierten Einzelteilen, wie Modulen oder Baugruppen, montiert wird, wobei die Demontage und/oder die Montage in mindestens zwei Arbeitsschritte unterteilt wird und für jeden Arbeitsschritt jeweils eine Arbeitsstation vorgesehen wird, wobei das Flugzeugtriebwerk und/oder Einzelteile desselben zur Ausführung der Arbeitsschritte durch die einzelnen Arbeitsstationen bewegt werden,
**dadurch gekennzeichnet, dass**
- die Demontage und/oder die Montage nach dem Fließbandprinzip in mehrere Hauptarbeitsschritte und in zumindest einem der Hauptarbeitsschritte bei der Demontage nach und bei der Montage vorgeschaltet zugeordnete Unterarbeitsschritte unterteilt wird und für jeden Hauptarbeitsschritt jeweils eine Hauptarbeitsstation und für jeden Unterarbeitsschritt jeweils eine Unterarbeitsstation vorgesehen wird, wobei
- die Demontage des Flugzeugtriebwerks in drei Hauptarbeitsschritte unterteilt wird, wobei das Flugzeugtriebwerk, nacheinander durch die jeweiligen, hintereinander angeordneten Hauptarbeitsstationen bewegt wird und dabei in seine Module zerlegt wird, wobei
∘ in einem ersten Hauptarbeitsschritt bzw. in einer ersten Hauptarbeitsstation ein Flugzeugtriebwerk als Einheit inspiziert wird und ein Hauptlüfterrad-Modul demontiert wird, dass anschließend das um das Hauptlüfterrad-Modul demontierte Flugzeugtriebwerk in eine zweite Hauptarbeitsstation bewegt und in einem zweiten Hauptarbeitsschritt ein Niederdruckturbinen-Modul und ein Hochdruckturbinen-Modul demontiert werden, und dass anschließend das entsprechend demontierte Flugzeugtriebwerk in eine dritte Hauptarbeitsstation bewegt und in einem dritten Hauptarbeitsschritt ein Hochdruckverdichter-Modul demontiert wird, wobei anschließend ein Lüfter-Modul übrig bleibt, wobei
∘ das im zweiten Hauptarbeitsschritt demontierte Niederdruckturbinen-Modul und Hochdruckturbinen-Modul der zweiten Hauptarbeitsstation nachgeordneten Unterarbeitsstationen zugeführt werden, wobei sowohl das Niederdruckturbinen-Modul als auch das Hochdruckturbinen-Modul durch entsprechend adaptierte, hintereinander angeordnete Unterarbeitsstationen bewegt und dabei in Einzelteile zerlegt werden, wobei die Einzelteile einer weiteren Inspektion und/oder einer Reparatur zugeführt werden, wobei
∘ das im dritten Hauptarbeitsschritt demontierte Hochdruckverdichter-Modul der dritten Hauptarbeitsstation nachgeordneten Unterarbeitsstationen zugeführt wird, wobei das Hochdruckverdichter-Modul durch entsprechend adaptierte, hintereinander angeordnete Unterarbeitsstationen bewegt und dabei in Einzelteile zerlegt wird, wobei die Einzelteile einer weiteren Inspektion undloder einer Reparatur zugeführt werden.

2. Verfahren nach Anspruch 1, **dadurch gekennzeichnet, dass** jede Arbeitsstation an den Arbeitsschritt, der in der Arbeitsstation ausgeführt wird, derart adaptiert ist, dass in jeder Arbeitsstation für den jeweiligen Arbeitsschritt benötigte Arbeitswerkzeuge und/oder Arbeitsmaterialien bereitgestellt werden.

3. Verfahren nach Anspruch 1 oder 2, **dadurch gekennzeichnet, dass** das Flugzeugtriebwerk und/oder Einzelteile desselben diskontinuierlich, nämlich in einem Takt, durch die Arbeitsstationen bewegt werden.

4. Verfahren nach Anspruch 3, **dadurch gekennzeichnet, dass** jeder Arbeitsschritt in der jeweiligen Arbeitsstationen an den Takt angepasst ist.

5. Verfahren nach Anspruch 1 oder 2, **dadurch gekennzeichnet, dass** das Flugzeugtriebwerk und/oder Einzelteile desselben kontinuierlich durch die Arbeitsstationen bewegt werden.

6. Verfahren nach einem oder mehreren der Ansprüche 1 bis 5, **dadurch gekennzeichnet, dass** die Arbeitstationen hintereinander angeordnet sind, derart, dass das Flugzeugtriebwerk und/oder Einzelteile desselben zur Demontage und/oder Montage durch die hintereinander angeordneten Arbeitstationen bewegt werden.

7. Verfahren nach Anspruch 1, **dadurch gekennzeichnet, dass** das Flugzeugtriebwerk und/oder Einzelteile desselben in einem Takt durch die Hauptarbeitsstationen und die Unterarbeitsstationen bewegt wird, wobei der Takt der Unterarbeitsstationen vorzugsweise kürzer ist als der Takt der Hauptarbeitstationen, derart, dass Einzelteile eines anderen Flugzeugtriebwerks in das Verfahren eingeschleust werden können.

8. Verfahren nach einem oder mehreren der Ansprüche 1 bis 7, **dadurch gekennzeichnet, dass** vor dem ersten Hauptarbeitsschritt das Flugzeugtriebwerk als Einheit gereinigt wird, und dass das Hauptlüfterrad-Modul unmittelbar einer weiteren Inspektion und/oder einer Reparatur zugeführt wird.

9. Verfahren nach einem oder mehreren der Ansprüche 1 bis 8, **dadurch gekennzeichnet, dass** das Lüfter-Modul in eine vierte Hauptarbeitsstation bewegt und von dort der vierten Hauptarbeitsstation nachgeordneten Unterarbeitsstationen zugeführt wird, wobei das Lüfter-Modul durch entsprechend adaptierte, hintereinander angeordnete Unterarbeitsstationen bewegt und dabei Einzelteile zerlegt wird, wobei die Einzelteile einer weiteren Inspektion und/oder einer Reparatur zugeführt werden.

10. Verfahren nach einem oder mehreren der Ansprüche 1 bis 9, **dadurch gekennzeichnet, dass** die Montage des Flugzeugtriebwerks, in vier Hauptarbeitsschritte unterteilt wird, wobei das Flugzeugtriebwerk nacheinander durch die jeweiligen, hintereinander angeordneten Hauptarbeitsstationen bewegt wird und dabei modulweise zusammengebaut wird.

11. Verfahren nach einem oder mehreren der Ansprüche 1 bis 10, **dadurch gekennzeichnet, dass** in einem ersten Hauptarbeitsschritt ein inspiziertes und/oder repariertes Lüfter-Modul in einer ersten Hauptarbeitsstation positioniert und anschließend in eine zweite Hauptarbeitsstation bewegt wird, dass in der zweiten Hauptarbeitsstation in einem zweiten Hauptarbeitsschritt ein inspiziertes und/oder repariertes Hochdruckverdichter-Modul an das Lüfter-Modul montiert und anschließend die zu zusammengebauten Module in eine dritte Hauptarbeitsstation bewegt werden, dass in der dritten Hauptarbeitsstation in einem dritten Hauptarbeitsschritt ein inspiziertes und/oder repariertes Niederdruckturbinen-Modul und Hochdruckturbinen-Modul an die zusammengebauten Module montiert und anschließend die weiter zusammengebauten Module in eine vierte Hauptarbeitsstation bewegt werden, und dass in der vierten Hauptarbeitsstation ein inspiziertes und/oder repariertes Hauptlüfterrad-Modul an die weiter zusammengebauten Module montiert und anschließend ein montiertes Flugzeugtriebwerk als Einheit justiert wird.

12. Verfahren nach einem oder mehreren der Ansprüche 1 bis 11, **dadurch gekennzeichnet, dass** vorzugsweise jedem Hauptarbeitschritt der Montage mehrere Unterarbeitsschritte vorgeschaltet sind, wobei in den jeweiligen Unterarbeitsschritten das Lüfter-Modul und/oder das Hochdruckverdichter-Modul und/oder das Niederdruckturbinen-Modul und/oder das Hochdruckturbinen-Modul aus inspizierten und/oder reparierten und/oder neuen Baugruppen und/oder Einzelteilen zusammengebaut wird.

13. Verfahren nach einem oder mehreren der Ansprüche 1 bis 12, **dadurch gekennzeichnet, dass** jeder Arbeitsschritt in der jeweiligen Arbeitsstationen an den Typ der zu wartenden Gasturbine, insbesondere des Flugzeugtriehwerks, angepasst ist, wobei unterschiedliche Typen von Gasturbinen gewartet werden können.

## Claims

1. A method for the assembly and/or disassembly of aircraft engines, wherein an aircraft engine is disassembled, subsequently individual components of the aircraft engine such as modules or assemblies are repaired, and subsequently the aircraft engine made up of inspected and/or repaired individual components such as modules or assemblies is assembled, wherein the disassembly and/or the assembly is subdivided into at least two work steps and for each work step respectively one workstation is provided, wherein the aircraft engine and/or the individual components of the latter are moved through the individual workstation, for carrying out the work steps,
**characterised in that**
- the disassembly and/or the assembly is/are subdivided according to the assembly line principle into a plurality of main work steps and within at least one of the main work steps into sub-work steps which are associated therewith downstream thereof during disassembly and upstream thereof during assembly, and for each main work step in each case one main workstation and for each sub-work step in each case one sub-workstation is provided, wherein
- the disassembly of the aircraft engine is subdivided into three main work steps, wherein the aircraft engine is moved successively through the respective main workstations arranged one after the other and in the course of this is dismantled into its modules, wherein
o in a first main work step or in a first main workstation, an aircraft engine is inspected as a unit and a main fan propeller module is disassembled, subsequently the aircraft engine disassembled around the main fan propeller module is moved into a second main workstation, and in a second main work step, a low-pressure turbine module and a high-pressure turbine module are disassembled, and subsequently the correspondingly disassembled aircraft engine is moved into a third main workstation, and in a third main work step, a high-pressure compressor module is disassembled, and subsequently a fan module remains, wherein
o the low-pressure turbine module and the high-pressure turbine module disassembled in the second main work step are fed to the sub-workstations provided downstream of the second main workstation, wherein both the low-pressure turbine module and the high-pressure turbine module are moved through correspondingly adapted sub-workstations arranged one after the other and in the course of this are dismantled into individual components, wherein the individual components are fed to a further inspection and/or repair, wherein
o the high-pressure compressor module disassembled in the third main work step is fed to sub-workstations provided downstream of the third main workstation, wherein the high-pressure compressor module is moved through correspondingly adapted sub-workstations arranged one after the other and in the course of this are dismantled into individual components, wherein the individual components are fed to a further inspection and/or repair.

2. The method as claimed in claim 1, **characterised in that** each workstation is adapted to the work step carried out in the workstation in such a way that in each workstation, work tools and/or work materials necessary for the respective work step are provided.

3. The method as claimed in claim 1 or 2, **characterised in that** the aircraft engine and/or the individual components of the latter are moved through the workstations discontinuously, i.e. in cycles.

4. The method as claimed in claim 3, **characterised in that** each work step is adapted to the cycle in the respective workstations.

5. The method as claimed in claim 1 or 2, **characterised in that** the aircraft engine and/or the individual components of the latter are continuously moved through the workstations.

6. The method as claimed in any one or more of claims 1 to 5, **characterised in that** the workstations are arranged one after the other in such a way that the aircraft engine and/or the individual components of the latter are moved through the workstations arranged one after the other for disassembly and/or assembly.

7. The method as claimed in claim 1, **characterised in that** the aircraft engine and/or the individual components of the latter are moved through the main workstations and the sub-workstations in a cycle, wherein the cycle of the sub-workstations is preferably shorter than the cycle of the main workstations, in such a way that individual components of another aircraft engine can be introduced into the process.

8. The method as claimed in any one or more of claims 1 to 7, **characterised in that** upstream of the first main work step, the aircraft engine is cleaned as a unit, and **in that** the main fan propeller module is immediately fed to a further inspection and/or repair.

9. The method as claimed in any one or more of claims 1 to 8, **characterised in that** the fan module is moved into a fourth main workstation and is fed from there to the sub-workstations provided downstream of the fourth main workstation, wherein the fan module is moved through correspondingly adapted sub-workstations arranged one after the other and in the course of this is dismantled into individual components, wherein the individual components are fed to a further inspection and/or repair.

10. The method as claimed in any one or more of claims 1 to 9, **characterised in that** the assembly of the aircraft engine is subdivided into four main work steps, wherein the aircraft engine is moved successively through the respective main workstations arranged one after the other and in the course of this is assembled on a modular basis.

11. The method as claimed in any one or more of claims 1 to 10, **characterised in that** in a first main work step, an inspected and/or repaired fan module is positioned in a first main workstation and is subsequently moved into a second main workstation, **in that** in the second main workstation, in a second main work step, an inspected and/or repaired high-pressure compressor module is mounted to the fan module and subsequently the assembled modules are moved to a third main workstation, **in that** in the third main workstation, in a third main work step, an inspected and/or repaired low-pressure turbine module and high-pressure turbine module is mounted to the assembled modules, and subsequently the further assembled modules are moved to a fourth main workstation, and **in that** in the fourth main workstation, an inspected and/or repaired main fan propeller module is mounted to the further assembled modules, and subsequently an assembled aircraft engine is adjusted as a unit.

12. The method as claimed in any one or more of claims 1 to 11, **characterised in that** preferably each main work step of the assembly has provided upstream thereof a plurality of sub-work steps, wherein in the respective sub-work steps, the fan module and/or the high-pressure compressor module and/or the low-pressure turbine module and/or the high-pressure turbine module is/are assembled from inspected and/or repaired and/or new assemblies and/or individual components.

13. The method as claimed in any one or more of claims 1 to 12, **characterised in that** each work step in the respective workstation is adapted to the type of gas turbine to be serviced, in particular the aircraft engine, with it being possible to service different types of gas turbines.

## Revendications

1. Procédé de montage et/ou de démontage de moteurs d'avion, dans lequel on démonte un moteur d'avion, puis on répare les éléments constitutifs du moteur d'avion, tels que des modules ou des blocs, et ensuite on monte le moteur d'avion à partir d'éléments constitutifs, tels que des modules ou des blocs, qui ont été inspectés et/ou réparés, le démontage et/ou le montage étant divisé en au moins deux étapes de travail et un poste de travail étant prévu pour chaque étape de travail, le moteur d'avion et/ou les éléments constitutifs de celui-ci passant par les différents postes de travail pour exécuter les étapes de travail,
**caractérisé en ce que**
- le démontage et/ou le montage étant divisé, selon le principe de la chaîne d'assemblage, en plusieurs étapes de travail principales et en plusieurs étapes de travail secondaires, associées à au moins une des étapes de travail principales en aval lors du démontage et en amont lors du montage et un poste de travail secondaire étant prévu pour chaque étape de travail secondaire,
- le démontage du moteur de l'avion étant divisé en trois étapes de travail principales, le moteur d'avion passant successivement par les postes de travail principaux respectifs, disposés les uns derrières les autres, et étant décomposés en ses modules,
∘ un moteur d'avion étant inspecté comme unité et un module de soufflante principal étant démonté dans une première étape principale ou dans un premier poste de travail principal, puis le moteur d'avion démonté autour du module de roue de soufflante principale étant amené à un deuxième poste de travail principal et un module de turbine à basse pression et un module de turbine à haute pression étant démontés dans une deuxième étape de travail principale et le moteur d'avion ainsi démonté étant amené à un troisième poste de travail principal et un module de compresseur à haute pression étant démonté dans une troisième étape de travail principal, un module de soufflante restant alors,
∘ le module de turbine à basse pression et le module de turbine à haute pression, démontés dans la deuxième étape principale, étant amenés à des postes de travail secondaires en aval du deuxième poste de travail principal, le module de turbine à basse pression et le module de turbine à haute pression passant tous les deux par des postes de travail secondaires, adaptés de façon appropriés et disposés les uns près les autres, et étant décomposés en éléments constitutifs, les éléments constitutifs étant amenés une nouvelle inspection et/ou une préparation,
∘ le module de compresseur à haute pression, démonté dans la troisième étape principale, étant amené à des postes de travail secondaires en aval du troisième poste de travail principal, le module de compresseur à haute pression passant par des postes de travail secondaires, adaptés de façon appropriés et disposés les uns après les autres, et étant décomposés en différents éléments constitutifs, les éléments constitutifs étant amenés à une nouvelle inspection et/ou une réparation.

2. Procédé selon la revendication 1, **caractérisé en ce que** chaque poste de travail est adapté à l'étape de travail qui est effectuée au poste de travail de sorte que des outils de travail et/ou des matières de travail nécessaires à l'étape de travail correspondante nécessaires sont amenés à chaque poste de travail.

3. Procédé selon la revendication 1 ou 2, **caractérisé en ce que** le moteur d'avion et/ou des éléments constitutifs de celui-ci passent de manière discontinue, c'est-à-dire de façon cadencée, par les postes de travail.

4. Procédé selon la revendication 3, **caractérisé en ce que** chaque étape de travail des postes de travail correspondants est adapté à la cadence.

5. Procédé selon la revendication 1 ou 2, **caractérisé en ce que** le moteur d'avion et/ou les éléments constitutifs de celui-ci peuvent passer de façon continue par les postes de travail.

6. Procédé selon l'une ou plusieurs des revendications 1 à 5, **caractérisé en ce que** les postes de travail sont disposés les uns derrière les autres de telle sorte que le moteur d'avion et/ou les éléments constitutifs de celui-ci peuvent passer par les postes de travail, disposés les uns derrière les autres, en vue du démontage et/ou du montage.

7. Procédé selon la revendication 1, **caractérisé en ce que** le moteur d'avion et/ou les éléments constitutifs de celui-ci passent par les postes de travail principaux et les postes de travail secondaires de façon cadencée, la cadence des postes de travail secondaires étant est de préférence plus courte que la cadence des postes de travail principaux de telle sorte que les éléments constitutifs d'un autre moteur d'avion peuvent être introduits dans le procédé.

8. Procédé selon l'une ou plusieurs des revendications 1 à 7, **caractérisé en ce que** le moteur d'avion comme unité est nettoyé avant la première étape principale et **en ce que** le module de roue de soufflante principale est amené directement à une nouvelle inspection et/ou une réparation.

9. Procédé selon l'une ou plusieurs des revendications 1 à 8. **caractérisé en ce que** le module de soufflante est amené à un quatrième poste de travail principal puis à des postes de travail secondaires en aval du quatrième poste de travail principal, le module de soufflante passant par des postes de travail secondaires adaptés de façon appropriée et disposés les uns derrières les autres, et les éléments constitutifs étant décomposés, les éléments constitutifs étant amenés à une nouvelle inspection et/ou une réparation.

10. Procédé selon l'une ou plusieurs des revendications 1 à 9, **caractérisé en ce que** le montage du moteur d'avion est divisé en quatre étapes de travail de principales, le moteur d'avion passant successivement par des principaux postes de travail respectifs, disposés les uns derrière les autres, et étant assemblé de façon modulaire.

11. Procédé selon l'une ou plusieurs des revendications 1 à 10, **caractérisé en ce que**, dans une première étape de travail principale, un module de soufflante inspecté et/ou réparé est positionné dans un premier poste de travail principal, puis est amené à un deuxième poste de travail principal, **en ce que**, dans le deuxième poste de travail principal, un module de compresseur à haute pression inspecté et/ou réparé est monté sur le module de soufflante dans une deuxième étape de travail principale, puis les modules assemblés sont amenés à un troisième poste de travail principal, **en ce que**, dans le troisième principal poste de travail, un module de turbine à basse pression et un module de turbine à haute pression, inspectés et/ou réparés, sont montés sur les modules assemblés dans une troisième étape principale, puis les autres modules assemblés sont amenés à quatrième poste de travail principal, et **en ce que**, dans le quatrième poste de travail principal, un module de roue de soufflante principale inspecté et/ou réparé est monté sur les autres modules assemblés, puis un moteur d'avion monté est réglé en tant qu'unité.

12. Procédé selon l'une ou plusieurs des revendications 1 à 11, **caractérisé en ce que** plusieurs étapes de travail secondaires sont prévues de préférence en amont de chaque étape de travail principale du montage, dans les étapes de travail secondaires respectives le module de soufflante et/ou le module de compresseur à haute pression et/ou le module de turbine à basse pression et/ou le module de turbine à haute pression sont assemblées à partir de nouveaux modules et/ou d'éléments constitutifs et/ou de modules et/ou d'éléments constitutifs inspectés et/ou réparés.

13. Procédé selon l'une ou plusieurs des revendications 1 à 12, **caractérisé en ce que** chaque étape de travail des postes de travail respectifs est adapté au type de turbine à gaz à entretenir, en particulier du moteurs d'avion, différents types de turbines à gaz pouvant être entretenus.
